# EUROPÄISCHE PATENTSCHRIFT

(11) **EP 1 779 938 B1**
(45) Veröffentlichungstag und Bekanntmachung des Hinweises auf die Patenterteilung: **23.03.2011**
(21) Anmeldenummer: 06123026.4
(22) Anmeldetag: 26.10.2006
(51) Int. Cl.: B09C 1/06, H05B 3/60, E02D 3/11, E21B 36/04

(54) **Verfahren und Vorrichtung zur selektiven dielektrischen Erwärmung eines Feststoffbettes mittels stabförmiger Elektroden**
Process and apparatus for selective dielectrical heating a particulate bed using elongate electrodes
Procédé et dispositif pour le chauffage diélectrique sélectif d'un lit particulaire à l'aide d'électrodes sous forme de barres

(30) Priorität: 27.10.2005 DE 102005052276
(43) Veröffentlichungstag der Anmeldung: 02.05.2007
(73) Patentinhaber: Helmholtz-Zentrum für Umweltforschung GmbH - UFZ, 04318 Leipzig (DE); Ecologia Environmental Solutions Ltd, Sittingbourne Kent ME9 8BZ (GB)
(72) Erfinder: Roland, Ulf, 04158 Leipzig (DE); Holzer, Frank, 04299 Leipzig (DE); Kopinke, Frank-Dieter, 04109 Leipzig (DE); Buchenhorst, Daniel, 04299 Leipzig (DE); Köhler, Robert, 04315 Leipzig (DE)
(74) Vertreter: Ziebig, Marlene

(56) Entgegenhaltungen:
- US-A- 4 476 926
- US-A- 4 498 535

## Beschreibung

Die Erfindung betrifft ein Verfahren und eine Vorrichtung zur selektiven dielektrischen Erwärmung eines Feststoffbettes mittels mindestens einer stabförmigen Elektrode mit den in den Oberbegriffen der Ansprüche 1 und 8 genannten Merkmalen. Insbesondere betrifft die vorliegende Erfindung ein Verfahren und eine Vorrichtung zur selektiven Erwärmung von kontaminierten Böden und anderen kontaminierten Feststoffen mittels Stabelektroden.

Die Reinigung von Böden und anderen kontaminierten Medien kann unter Verwendung verschiedener Heizmethoden thermisch unterstützt werden. Bei der Bodensanierung haben sich beispielsweise die thermisch unterstützte Bodenluftabsaugung und die thermisch unterstützte mikrobielle Bodenreinigung etabliert. Eine Temperaturerhöhung beschleunigt in der Regel den Schadstoffaustrag durch die Erhöhung von Dampfdrücken und Mobilitäten, Wasserlöslichkeiten und Bioverfügbarkeit der Kontaminanten. Außerdem können, besonders bei niedriger Umgebungstemperatur, mikrobiologische Reinigungsvorgänge durch Einstellung optimaler Bodentemperaturen unterstützt werden. Bei höheren Temperaturen können Schadstoffe durch die Initiierung von Umwandlungen oder chemischen Reaktionen mit der Bodenmatrix durch Hydrolyse, Oxidation oder Pyrolyse unschädlich gemacht bzw. immobilisiert werden.

Dielektrische Erwärmungsmethoden besitzen insbesondere für in-situ-Anwendungen ein erhebliches Potenzial. Der Einsatz von Radiowellen (z.B. mit einer Hochfrequenz [HF] im Bereich zwischen 1 und 50 MHz - Radiowellen[RW]-Bereich) ermöglicht durch Eindringtiefen im Meter-Bereich die gesteuerte Aufheizung größerer Volumina. Das physikalische Wirkprinzip ist dem eines Mikrowellenofens für Haushalts- und industrielle Anwendungen vergleichbar. Durch dielektrische Heizverfahren können bei Bedarf und ausreichender vorhandener Leistung sehr schnelle Aufheizprozesse realisiert werden.

Neben schadstoffhaltigen Böden können auch andere feste Materialien wie Abfälle oder Reststoffe mit diesen Verfahren dekontaminiert werden. Darüber hinaus ist es möglich, Wertstoffe mit Hilfe dieser Methode aus dem Feststoff (z. B. Ölschiefer) zu entfernen und nutzbar zu machen. Außerdem ist auch die thermische Regenerierung von Adsorbermaterialien unter Nutzung der Radiowellen-Erwärmung möglich.

Für die Anwendung der dielektrischen Erwärmung in der Praxis ist es essenziell, die gewünschten Temperaturprofile in räumlich ausgedehnten Bereichen oder Kompartimenten realisieren zu können. Für die Erfüllung dieser Anforderung ist die verwendete Elektrodengeometrie (Stabelektroden, ausgedehnte Platten oder Antennen) entscheidend.

Inhomogene Temperaturverteilungen bergen die Gefahr, dass der Sanierungserfolg nicht im gesamten Bereich gewährleistet werden kann oder dass sogar auf Grund einer Rekondensation von bereits freigesetzten Schadstoffen eine erneute Kontamination anderer, ggf. bisher unbelasteter, Feststoffbereiche erfolgt. Kann man von einer Sättigung der Bodenluft mit Schadstoffen bei der entsprechenden Temperatur ausgehen, so ist für eine effektive Entfernung der Kontaminanten über die Gasphase sicherzustellen, dass der konvektive Transport möglichst nur durch Bereiche gleicher oder höherer Temperatur erfolgt. Die US 4,498,535 stellt daher eine Vorrichtung mit mehreren Stabelektroden zur Verfügung, mit der eine möglichst gleichmäßige Heizrate erreicht werden kann. Dabei wird eine stehende Welle erzeugt, deren Heizrate entlang der Elektrode variiert und somit an die Unregelmäßigkeiten der Umgebung angepasst werden kann. Zur Verringerung der Einkopplung der Energie in den umgebenden Bodenbereich kann die Elektrode mit einer Ummantelung versehen werden, wobei durch unterschiedliche Mantelstärken eine Egalisierung der Heizrate erreicht werden kann. Andererseits ist es beim Vorliegen sehr unterschiedlicher lokaler Schadstoffkonzentrationen im Boden ökonomisch sinnvoll, bevorzugt die hochkontaminierten Bereiche zu erwärmen und darüber hinaus die vorgenannte Bedingung bei der Realisierung der Bodenluftabsaugung zu berücksichtigen.

Obwohl Plattenelektroden theoretisch für die Erfüllung dieser Randbedingungen am besten geeignet sind, werden (besonders bei in-situ-Anwendungen) sehr oft stabförmige Elektroden eingesetzt, da diese verhältnismäßig einfach in den Boden eingebracht werden können, weil dafür die Verwendung konventioneller Bohrtechnik möglich ist. Durch vertikale Stabelektroden können prinzipiell auch tiefer liegende Boden- bzw. Feststoffschichten erreicht und definiert erwärmt werden.

In Abhängigkeit von den Bodeneigenschaften tritt jedoch oft eine starke Dämpfung der elektromagnetischen Welle entlang von stabförmigen Elektroden auf, wodurch bevorzugt die oberen Boden- bzw. Feststoffschichten aufgeheizt werden und in den tiefergelegenen Schichten kein ausreichender Temperaturanstieg zu verzeichnen ist.

Die Verwendung von Stabelektroden bei der Radiowellen-Bodenerwärmung ist unter Anderem aus DE 43 37 192 A1, US 4 470 459, US 5 076 727, US 4 144 935 und US 4 140 180 bekannt. Typische Anordnungen für die in-situ-Bodenreinigung bzw. die in-situ-Bodenerwärmung bestehen aus drei parallelen Reihen von vertikal angeordneten Stabelektroden, wobei die mittlere Reihe von zwei Reihen geerdeter Elektroden umgeben ist. Bei solchen Anordnungen ist in der Regel eine bevorzugte Erwärmung der oberen Bodenschichten zu beobachten. Dieser Effekt ist umso stärker, je intensiver die Energieeinkopplung in den Boden bzw. Feststoff erfolgt und je größer deren dielektrischer Verlustfaktor ist. Tiefer gelegene Bodenschichten sind dadurch für eine dielektrische Erwärmung praktisch nicht erreichbar, zumindest, wenn Frequenzen im MHz-Bereich für Böden mit einem Wassergehalt unterhalb der Sättigung eingesetzt werden. In der Sanierungspraxis ist jedoch oft die Situation zu verzeichnen, dass tieferliegende Schichten verunreinigt sind. Aufschwimmende Kohlenwasserstoffphasen auf Grundwasserleitern sind hierfür ein oft anzutreffendes Beispiel.

Eine Lösungsmöglichkeit für die Problematik der beschränkten Erreichbarkeit für die dielektrische Erwärmung besteht darin, zu geringeren Frequenzen des elektromagnetischen Feldes überzugehen. Diese Option ist jedoch unter praktischen Gesichtspunkten auf Grund der kommerziellen Verfügbarkeit von HF-Spannungsquellen sehr eingeschränkt. Im Niederfrequenz(NF)-Bereich (z. B. 50 oder 60 Hz) tritt ein solcher Effekt verstärkter Dämpfung nicht auf, die Erwärmung beruht jedoch dann praktisch ausschließlich auf ohmschen Verlusten. Für trockene Medien ist die Methode der NF-Erwärmung in der Regel nicht anwendbar.

Bei Vorrichtungen zur dielektrischen Erwärmung nach dem Stand der Technik besteht nachteilhafterweise nicht die Möglichkeit, den Energieeintrag entlang der stabförmigen Elektroden gezielt und variabel zu beeinflussen. So ist es beispielsweise nicht möglich, hochkontaminierte Horizonte in Böden und Feststoffen räumlich-selektiv und unter Umständen sukzessive aufzuheizen und die Verfahrensweise in Abhängigkeit vom Sanierungsfortschritt während des Prozesses anzupassen.

Eine selektive Erwärmung bestimmter Bodenbereiche wird nach dem Stand der Technik erreicht (DE 198 24 930 A1; US 5,829,519 und US 5,199,488), indem Koaxialantennen eingesetzt werden. Allerdings muss man bei der Verwendung von Koaxialantennen von der einfachen Stabelektrodengeometrie abweichen. Während bei den Stabelektrodenanordnungen in der erfindungsgemäßen Anordnung eine Elektrode nur jeweils mit einer Phase des (verwendeten) HF-Generators verbunden ist, werden bei Koaxialantennenanordnungen beide Phasen in den zu erwärmenden Bodenbereich geführt. Hierzu werden vorzugsweise Koaxialkabel oder Koaxialleitungen verwendet, die eine weitgehend verlustfreie Energieübertragung in den zu erwärmenden Bereich sicherstellen. Die Verwendung von Koaxialantennen bzw. Axialdipolen hat jedoch den Nachteil, dass das elektrische Feld sich konzentriert in der Umgebung der Antenne aufbaut und somit nur eine verhältnismäßig geringe Eindringtiefe in das zu erwärmende Medium realisiert werden kann.

Es ist daher Aufgabe der vorliegenden Erfindung, ein Verfahren und eine Vorrichtung zur räumlich-selektiven Erwärmung und/oder Reinigung eines Feststoffbettes anzugeben, mit welchen ein Feststoffbett (d. h. z. B. ein Bodenvolumen) entlang des Verlaufes von stabförmigen Elektroden selektiv und gezielt erwärmt werden kann.

Insbesondere soll es möglich sein, dass die Einkopplung von elektromagnetischen Wellen in das die Elektroden umgebende Material derart erfolgt, dass sich bestimmte Abschnitte eines Boden- oder Feststoffhorizontes bevorzugt erwärmen, andere jedoch nahezu nicht aufgeheizt werden.

Diese Aufgaben werden erfindungsgemäß durch ein Verfahren und eine Vorrichtung mit den in den Oberbegriffen des Anspruchs 1 (Verfahrensanspruch) und des Anspruchs 8 (Vorrichtungsanspruch) genannten Merkmalen im Zusammenwirken mit den Merkmalen im Oberbegriff gelöst.

Das erfindungsgemäße Verfahren zur selektiven dielektrischen Erwärmung eines Feststoffbettes unter Verwendung einer oder mehrerer stabförmiger Elektroden ist durch das Einkoppeln von elektromagnetischer Strahlung in das Feststoffbett über die mindestens eine stabförmige Elektrode gekennzeichnet, wobei der Bereich zwischen der Mantelfläche der Elektrode und dem Feststoffbett in mindestens zwei Abschnitte entlang der Längsachse der Elektrode unterteilt ist und die Abschnitte vollständig gefüllt sind mit jeweils einem Material unterschiedlicher relativer Dielektrizitätskonstante, dessen relative Dielektrizitätskonstante sich auch von der relativen Dielektrizitätskonstanten des Feststoffbettes unterscheidet.

Die vorliegende Erfindung bezieht sich nicht auf Axialdipole oder Koaxialantennen, sondern auf einfache Elektroden, die vorzugsweise mindestens paarweise in das zu erwärmende Medium eingeführt werden. Dies hat den Vorteil, dass sich das elektrische Feld zwischen den Elektroden unterschiedlicher Polarität ausbildet und somit eine homogenere selektive Volumenerwärmung möglich ist. Außerdem bietet das Einbringen einfacher stabförmiger Elektroden, beispielsweise Stahlrohren, verfahrenstechnische Vorteile gegenüber der Anwendung von Koaxialantennen.

Das erfindungsgemäße Verfahren weist folgende Verfahrensschritte auf: Einbringen mindestens einer stabförmigen Elektrode in ein Feststoffbett, und Einkoppeln von elektromagnetischer Strahlung in das Feststoffbett über die mindestens eine stabförmige Elektrode, wobei der Bereich zwischen der Mantelfläche der Elektrode und dem Feststoffbett in mindestens zwei Abschnitte entlang der Längsachse der Elektrode unterteilt ist und die Abschnitte vollständig gefüllt sind mit jeweils einem Material unterschiedlicher relativer Dielektrizitätskonstante, dessen relative Dielektrizitätskonstante sich auch von der relativen Dielektrizitätskonstante des Feststoffbettes unterscheidet.

Vorzugsweise wird die eine Elektrode bzw. werden die mindestens zwei Elektroden zur Erzeugung eines elektromagnetischen Feldes im Feststoff mittels eines HF-Generators gespeist. Da sich die vorliegende Erfindung nicht auf Axialdipole oder Koaxialantennen bezieht, wird die mindestens eine stabförmige Elektrode mit einer Hochfrequenzspannung (mittels des HF-Generators) gespeist, die lediglich eine Polarität (so genannte "heiße" bzw. "kalte", geerdete Elektrode) aufweist. Hingegen werden bei Koaxialantennenanordnungen beide Phasen in die Antenne gespeist und somit in den zu erwärmenden Bodenbereich geführt. Bei der (bevorzugten) Verwendung zweier stabförmige Elektroden werden diese ebenfalls mit nur einer Phase gespeist, wobei sich die Polarität der eingespeisten Hochfrequenzspannung für die beiden Elektroden unterscheidet. Bei mehr als zwei Elektroden ist es vorgesehen, dass sich die Polarität (der eingespeisten Hochfrequenzspannung) mindestens zweier Elektroden unterscheidet.

Vorzugsweise wird die mindestens eine stabförmige Elektrode in das Feststoffbett senkrecht in Bezug auf die Oberfläche des Feststoffbettes eingebracht und die Kontaktierung erfolgt oberhalb der Oberfläche. Vorzugsweise wird in einem Teilbereich entlang der Elektrode ein Material zwischen Elektrodenoberfläche und Festbett angeordnet, dessen relative Dielektrizitätskonstante niedriger ist als die relative Dielektrizitätskonstante des Feststoffbettes. Vorzugsweise wird zusätzlich im Bereich des der Oberfläche des Feststoffbettes abgewandten Endes der Elektrode ein Material angeordnet, dessen relative Dielektrizitätskonstante sich von der relativen Dielektrizitätskonstante des Feststoffbettes unterscheidet. Erfindungsgemäß werden in mindestens zwei Abschnitten entlang der Längsachse der Elektrode Materialien unterschiedlicher relativer Dielektrizitätskonstante zwischen Mantelfläche der Elektrode und Feststoffbett angeordnet. Vorzugsweise wird in mindestens zwei Abschnitten entlang der Elektrode ein Material mit bereichsweise unterschiedlicher radialer Ausdehnung zwischen Mantelfläche der Elektrode und Feststoffbett angeordnet, welches eine relative Dielektrizitätskonstante aufweist, diesich von der relativen Dielektrizitätskonstante des Feststoffbettes unterscheidet. Vorzugsweise wird das Material, dessen relative Dielektrizitätskonstante sich von der relativen Dielektrizitätskonstante des Feststoffbettes unterscheidet, konzentrisch um die Elektrode herum angeordnet. Vorzugsweise wird als Material, dessen relative Dielektrizitätskonstante niedriger ist, als die Dielektrizitätskonstante des Feststoffbettes, Luft verwendet. Vorzugsweise wird in Bezug auf das Volumen als Hauptbestandteil des Materials, dessen relative Dielektrizitätskonstante höher ist als die Dielektrizitätskonstante des Feststoffbettes, Wasser verwendet. Vorzugsweise wird das Material, dessen relative Dielektrizitätskonstante sich von der relativen Dielektrizitätskonstante des Feststoffbettes unterscheidet, in ein zur Elektrode konzentrisch angeordnetes Führungsrohr eingebracht. Vorzugsweise wird das Material, dessen relative Dielektrizitätskonstante sich von der relativen Dielektrizitätskonstante des Feststoffbettes unterscheidet, in ein zur Elektrode konzentrisch angeordnetes Führungsrohres in vordefinierten Abschnitten eingebracht.

Vorzugsweise werden zusätzlich aus dem Feststoffbett Gase abgesaugt. Vorzugsweise wird die eine Elektrode bzw. werden die mindestens zwei Elektroden über ein elektronisches Anpassnetzwerk mit dem HF-Generator verbunden. Vorzugsweise wird durch die Wahl der die axialen Bereiche ausfüllenden Materialien und optional ergänzend durch die Wahl der zur Elektrode senkrechten Ausdehnung der axialen Bereiche entlang der Elektrode/Elektroden eine räumlich-selektive Erwärmung von Schichten des Feststoffes senkrecht zur Elektrodenrichtung gesteuert.

Die erfindungsgemäße Vorrichtung zur räumlich-selektiven Erwärmung eines Feststoffbettes mittels elektromagnetischer Strahlung weist mindestens eine (bevorzugt mindestens zwei) stabförmige Elektrode(n) auf, wobei der Bereich zwischen der Mantelfläche der Elektrode und dem Feststoffbett in mindestens zwei Abschnitte entlang der Längsachse der Elektrode unterteilt ist und die Abschnitte vollständig gefüllt sind mit jeweils einem Material unterschiedlicher relativer Dielektrizitätskonstante, dessen relative Dielektrizitätskonstante sich auch von der relativen Dielektrizitätskonstante des Feststoffbettes unterscheidet. Vorzugsweise weist die Vorrichtung mindestens zwei Elektroden auf, deren Längsachsen parallel zueinander angeordnet sind.

Vorzugsweise weist die Vorrichtung mindestens eine HF-Quelle (vorzugsweise einen HF-Generator) zur Speisung der mindestens einen Elektrode mit einer HF-Spannung auf. Der HF-Generator besitzt vorzugsweise eine Arbeitsfrequenz im Bereich zwischen 1 und 50 MHz. Der HF-Generator versorgt die jeweiligen Elektroden (da sich die vorliegende Erfindung nicht auf Axialdipole oder Koaxialantennen bezieht) mit einer Hochfrequenzspannung, die lediglich eine Polarität ("heiße" oder "kalte", geerdete Elektrode) aufweist. Hingegen werden bei Koaxialantennenanordnungen beide Phasen der HF-Spannung in die Antenne gespeist.

Vorzugsweise ist die mindestens eine Elektrode zylinderförmig ausgebildet. Erfindungsgemäß ist der Bereich zwischen der Mantelfläche der Elektrode und dem zu erwärmenden Feststoff in mindestens zwei Abschnitte entlang der Längsachse der Elektrode unterteilt, die vollständig mit jeweils einem Material gefüllt sind, dessen relative Dielektrizitätskonstante sich voneinander und von der relativen Dielektrizitätskonstante des Feststoffbettes unterscheidet. Vorzugsweise ist ein jeweils erstes Ende der Elektrode mit dem HF-Generator verbunden. Vorzugsweise ist die mindestens eine Elektrode über Koaxialleitungen und über ein elektronisches Anpassnetzwerk mit dem HF-Generator verbunden. Vorzugsweise ist mindestens eine Elektrode mit einer Vorrichtung zur Absaugung von Schadstoffen verbunden.

Vorzugsweise ist in mindestens einem Teil entlang der Elektrode zwischen Mantelfläche der Elektrode und zu erwärmenden Feststoff ein Material angeordnet, dessen relative Dielektrizitätskonstante sich von der relativen Dielektrizitätskonstante des Feststoffbettes derart unterscheidet, dass dadurch die Energieeinkopplung in den Feststoff reduziert wird. Vorzugsweise weist die Vorrichtung mindestens zwei Abschnitte entlang der Längsachse der Elektrode auf, welche zwischen der Mantelfläche der Elektrode und dem Feststoff Materialien unterschiedlicher radialer Ausdehnung aufweisen, wobei die Materialien eine relative Dielektrizitätskonstante aufweisen, die sich von der relativen Dielektrizitätskonstante des Feststoffbettes unterscheidet. Erfindungsgemäß weist die Vorrichtung mindestens zwei Abschnitte entlang der Längsachse der (mindestens einen) Elektrode auf, welche zwischen derMantelfläche der Elektrode und dem Feststoff Materialien unterschiedlicher Dielektrizitätskonstanten aufweisen, deren relative Dielektrizitätskonstante sich sowohl untereinander als auch vom zu wärmenden Feststoff unterscheiden.

Vorzugsweise ist das Material, dessen relative Dielektrizitätskonstante niedriger als die relative Dielektrizitätskonstante des Feststoffbettes ist, Luft. Vorzugsweise ist (in Bezug auf das Volumen) der Hauptbestandteil des Materials, dessen relative Dielektrizitätskonstante höher als die relative Dielektrizitätskonstante des Feststoffbettes ist, Wasser.

Vorzugsweise weist die Vorrichtung (bei mindestens einer, vorzugsweise bei jeder Elektrode) ein zur Längsachse der Elektrode konzentrisch angeordnetes Führungsrohr auf, innerhalb dessen das Material, dessen relative Dielektrizitätskonstante sich von der relativen Dielektrizitätskonstante des Feststoffbettes unterscheidet, angeordnet ist. Vorzugsweise sind innerhalb des konzentrisch angeordneten Führungsrohres mindestens zwei axiale Abschnitte vorgesehen, innerhalb derer Materialien unterschiedlicher relativer Dielektrizitätskonstante angeordnet sind, wobei die Abschnitte mit einer Vorrichtung zur flexiblen Einbringung und Entfernung der Materialien verbunden sind.

Vorzugsweise werden Vorrichtungen eingesetzt, die eines oder mehrere der folgenden Merkmale aufweisen:
- Stabförmige Elektroden mit zylindrischer Geometrie werden senkrecht zur Oberfläche in das Festbett eingebracht und oberhalb der Oberfläche mit elektrischen Anschlüssen versehen. In einer bevorzugten Ausführungsvariante des erfindungsgemäßen Verfahrens werden mindestens zwei Elektroden, besonders bevorzugt drei parallele Reihen von Elektroden in das Feststoffbett eingebracht, wobei die Längsachsen parallel zueinander verlaufen.
- Der Bereich in radialer Richtung zwischen der Elektrodenoberfläche und dem zu erwärmenden Material wird erfindungsgemäß abschnittsweise vollständig mit einem Stoff gefüllt, dessen dielektrische Eigenschaften und insbesondere dessen relative Dielektrizitätskonstante bei der angewandten Hochfrequenz sich von denen des zu erwärmenden Feststoffs unterscheiden, wobei erfindungsgemäß mindestens zwei Abschnitte mit jeweils einem Stoff unterschiedlicher dielektrische Eigenschaften und insbesondere unterschiedlicher relativer Dielektrizitätskonstanten gefüllt werden.
- Dieser Bereich kann in einer bevorzugten Variante auch das der Kontaktierung abgewandte Ende der Elektrode vollständig umfassen.
- In einer weiteren bevorzugten Variante wird die Ausdehnung des Bereiches in radialer Richtung zwischen Elektrodenoberfläche und dem zu erwärmenden Feststoff entlang der Elektrodenlängsachse variiert.
- Vorzugsweise wird das Material innerhalb eines zur Elektrode konzentrisch angeordneten Führungsrohres eingebracht. In einer besonders bevorzugten Ausführungsvariante wird das Material innerhalb eines zur Elektrode konzentrisch angeordneten Führungsrohres innerhalb vordefinierter axialer Abschnitte eingebracht.
- Als bevorzugte Medien, die sich in ihren dielektrischen Eigenschaften von denen des zu erwärmenden Feststoffs unterscheiden, werden Luft und Wasser eingesetzt.

Die radiale Ausdehnung des zwischen Mantelfläche der Elektrode und Feststoffbett eingebrachten Materials beträgt vorzugsweise zwischen 30% und 300% und bevorzugt zwischen 50% und 150% des Durchmessers der Elektrode.

Zur dielektrischen Erwärmung des Feststoffes ist das Elektrodensystem vorzugsweise über ein elektronisches Anpassnetzwerk mit einem HochfrequenzGenerator verbunden. Hierdurch wird ein optimaler Energietransfer in das zu erwärmende Medium sichergestellt, wobei sich eine große Flexibilität hinsichtlich der Materialeigenschaften (trocken, feuchte, porös, massiv) ergibt.

In einem bevorzugten Anwendungsfall erfolgt der Schadstoffaustrag aus dem Boden über eine Anlage zur Bodenluftabsaugung. Besonders bevorzugt ist dabei die Variante, mindestens eine stabförmige Elektrode gleichzeitig als Absaugbrunnen für die Bodenluft einzusetzen.

Vorzugsweise weist die Vorrichtung ein zur Längsachse der stabförmigen Elektrode konzentrisch angeordnetes füllbares Führungsrohr auf, innerhalb dessen das (Füll-)Material (beispielsweise Luft oder Wasser) angeordnet ist. Neben den bevorzugten Materialien Luft und Wasser kann für bestimmte Applikationen die Verwendung eines Inertgases wie Stickstoff als Füllmaterial vorteilhaft sein. In einer bevorzugten Ausführungsvariante erstreckt sich dieses Führungsrohr über die gesamte im Feststoff befindliche Elektrodenlänge.

Bei der Verwendung mehrerer Elektroden (bevorzugt zwei Elektroden, besonders bevorzugt drei parallele Reihen von Elektroden) beträgt der Abstand zwischen den Elektroden vorzugsweise zwischen 30 cm und 5 m, besonders bevorzugt zwischen 50 cm und 3 m. Die Länge der Elektroden richtet sich nach der Tiefe bzw. der Ausdehnung des zu erwärmenden Bereichs und beträgt in der Regel mehrere Meter. Die radiale Ausdehnung des mit einem Medium, dessen dielektrischen Eigenschaften sich von dem zu erwärmenden Material unterscheiden, gefüllten Bereiches ist, beträgt vorzugsweise zwischen 5 cm und 30 cm.

Die Erfindung beruht auf Befunden, dass die Erwärmung des Feststoffes entlang von stabförmigen Elektroden durch die folgenden unterschiedlichen Mechanismen gezielt beeinflusst werden kann:
1. Eine selektive Erwärmung ist dadurch zu realisieren, dass in axialen Bereichen, in denen keine oder nur eine geringe Erwärmung des Feststoffs bzw. Bodens realisiert werden soll, ein die Stabelektroden umgebender, vorzugsweise radialer Bereich mit einem Medium mit geringer relativer Dielektrizitätskonstante (d. h. geringerer relativer Dielektrizitätskonstante als die des zu erwärmenden Feststoffs) gefüllt ist. Der zu erwärmende Bereich ist dadurch gekennzeichnet, dass an dieser Stelle die Dielektrizitätskonstante des Füllmediums höher ist.
2. Eine selektive Erwärmung ist auch dadurch zu realisieren, dass die radiale Ausdehnung des unter 1. beschriebenen Bereiches, der mit einem Medium mit niedriger relativer Dielektrizitätskonstante ausgefüllt ist, variiert wird. Die Feststoffbereiche, wo der Abstand geringer ist, werden in diesem Fall stärker erwärmt.
3. Weiterhin können der Energieeintrag und die Erwärmung des Feststoffes durch die Füllung des axialen Bereiches mit Medien unterschiedlicher relativer Dielektrizitätskonstante geregelt werden. In diesem Fall werden die Bereiche, in denen der Zwischenraum zwischen Elektrode und Feststoff mit einem Medium hoher Dielektrizitätskonstante (z. B. Wasser mit ca. 80) gefüllt ist, gegenüber denen, die mit einem Medium mit niedriger relativer Dielektrizitätskonstante (z. B. Luft mit 1) gefüllt sind, verstärkt erwärmt. In einer bevorzugten Ausführung soll dieser Bereich durch geeignete Maßnahmen veränderbar, d. h. variabel hinsichtlich seiner Ausdehnung entlang der Elektrode, sein. So ist es beispielsweise möglich, dass die axialen Bereiche durch unterschiedliche Kammern ausgebildet sind, wobei die einzelnen Kammern hohlzylinderförmig konstruiert sind. Erfindungsgemäß können die Kammern während der Erwärmung des Bodens mit unterschiedlichen Materialien/Medien befüllt werden (hierbei eignen sich besonders flüssige und gasförmige Materialien wie Wasser bzw. Luft, die beispielsweise mittels Schläuchen in die Kammern gefüllt oder aus den Kammern abgesaugt werden können), so dass die Einkopplung der durch die stabförmige Elektrode abgestrahlten Energie in die einzelnen Feststoff- bzw. Bodenschichten räumlich-selektiv gesteuert werden kann.
4. Die selektive Erwärmung kann auch durch Kombination der vorgenannten Prinzipien, also beispielsweise sowohl durch Variation der Materialien in unterschiedlichen axialen Bereichen mindestens einer Elektrode als auch durch Variation der radialen Ausdehnung der unterschiedlichen axialen Bereiche realisiert werden.

Durch die Etablierung eines radialen Bereiches mit Verwendung eines Füllmediums (Material) mit einer niedrigeren relativen Dielektrizitätskonstante als der des Feststoffs bzw. Bodens wird die Einkopplung der elektromagnetischen Welle in das Material (z. B. den kontaminierten Boden) im entsprechenden Stabelektrodenabschnitt stark verringert und somit die Dämpfung der Welle reduziert. Durch die Variation des Durchmessers des radialen Bereiches wird der Abstand zwischen Elektrodenwand und Medium so verändert, dass die Energieeinkopplung in einem Bereich mit geringem Abstand bevorzugt erfolgt. Durch das Füllen des radialen Bereiches zwischen Elektrodenwand und Feststoff mit einem Medium mit höherer relativer Dielektrizitätskonstante (beispielsweise Wasser mit εᵣ ≈ 80; in der Regel deutlich höher als die des zu erwärmenden Mediums) wird im entsprechenden Abschnitt eine selektive Energieeinkopplung und Erwärmung realisiert.

Die Etablierung eines Bereiches um die Elektrode(n), der mit einem Medium niedriger Dielektrizitätskonstante gefüllt ist, führt außerdem effektiv zu einer Vergrößerung des Elektrodendurchmessers, was wiederum die Überhitzung des Nahbereiches der Elektroden verhindert. Dieser Effekt beruht auf der starken Abnahme des elektrischen Feldes in radialer Richtung von der stabförmigen Elektrode. Vorzugsweise sollte sich die relative Dielektrizitätskonstante von der des Feststoffes um mindestens den Faktor 3, besonders bevorzugt um den Faktor 10 unterscheiden.

Die erfindungsgemäßen Lösungen erlauben es, die Radiowellen-Feststofferwärmung entlang stabförmiger Elektroden so zu verbessern, dass ein selektiver Energieeintrag im gewünschten Bereich (d. h. räumlich-selektiv) realisiert werden kann und dass dieser Bereich im Verlaufe der Behandlungsmaßnahme ohne großen technischen Aufwand veränderbar ist.

Als Elektrodenmaterial kann beispielsweise Baustahl verwendet werden. Durch eine Perforation der Elektrode ist es außerdem auf dem Gebiet der Bodensanierung möglich, eine thermisch unterstützte Bodenluftabsaugung durch die Elektrode zu realisieren.

Die Erfindung wird nachstehend anhand von schematischen Darstellungen und anhand von Ausführungsbeispielen näher erläutert.

Es zeigen:

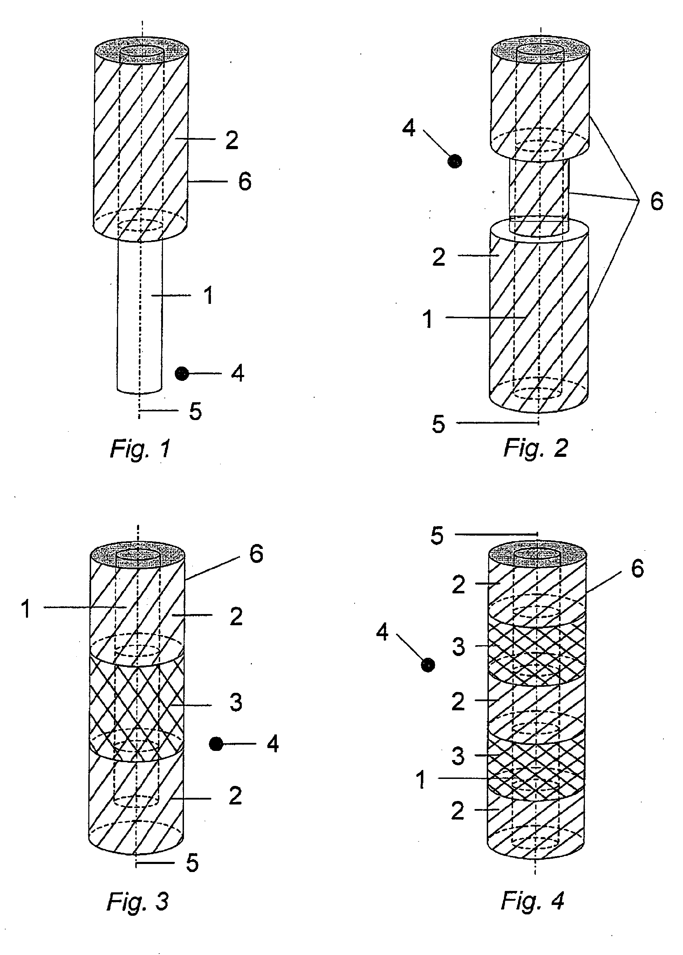

- Fig. 1: eine schematische Darstellung einer Vergleichsvorrichtung mit ei- nem sich über einen (oberen) Teil der Elektrodenlänge erstrecken- den, axialen Bereich aus einem Material, dessen relative Dielektrizi- tätskonstante sich von der relativen Dielektrizitätskonstante des die- sen Bereich umgebenden Feststoffbettes signifikant unterscheidet,
- Fig. 2: eine schematische Darstellung einer Vergleichsvorrichtung mit drei axialen Bereichen, wobei der mittlere axiale Bereich eine geringere radiale Ausdehnung als die äußeren beiden axialen Bereiche auf- weist,
- Fig. 3: eine schematische Darstellung einer erfindungsgemäßen Vorrich- tung mit drei axialen Bereichen gleicher radialer Ausdehnung, wobei der mittlere axiale Bereich aus einem anderen Material als die äuße- ren beiden axialen Bereiche besteht,
- Fig.4: eine schematische Darstellung einer erfindungsgemäßen Vorrich- tung mit fünf axialen Bereichen gleicher radialer Ausdehnung, wobei die äußeren axialen Bereiche und der mittlere axiale Bereich aus ei- nem anderen Material als die übrigen axialen Bereiche bestehen,

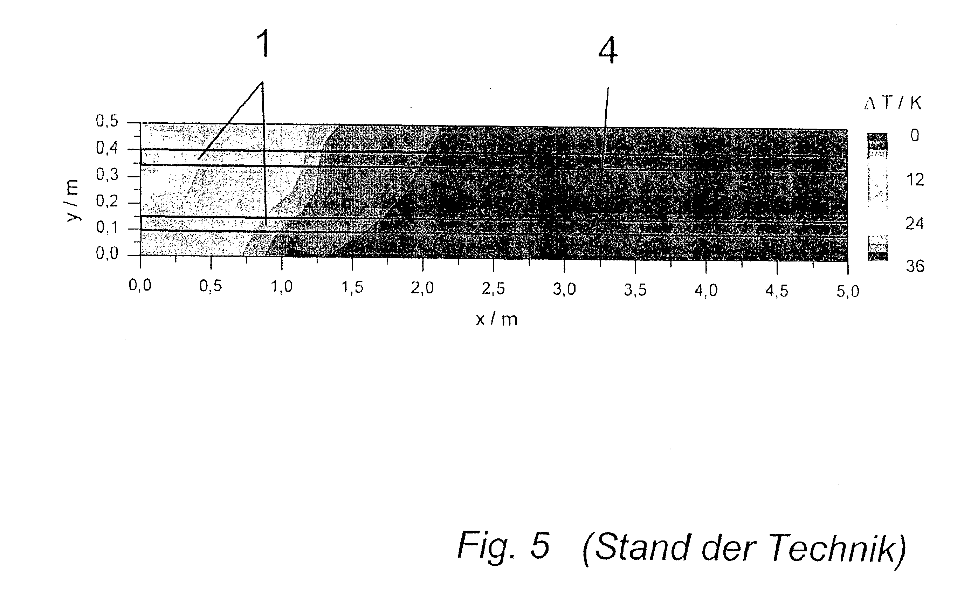

- Fig. 5: das Temperaturprofil eines Feststoffbettes nach der dielektrischen Erwärmung mit einer Vorrichtung aus stabförmigen Elektroden (Ra- diowellen-Frequenz 13,56 MHz, Elektrodenmaterial Kupfer, Leistung 1,65 kW, Aufheizzeit 4 h) nach dem Stand der Technik,

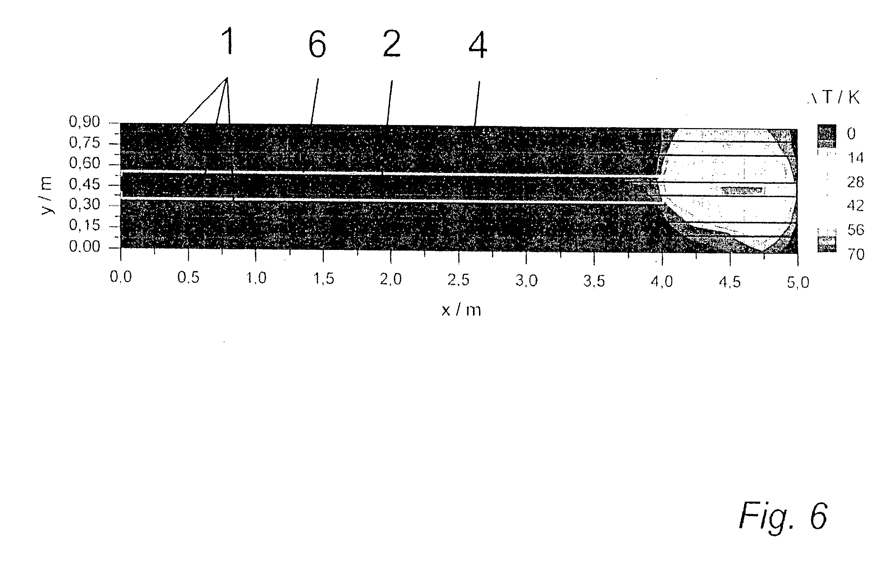

- Fig. 6: das Temperaturprofil eines Feststoffbettes nach Erwärmung (Radio- wellen-Frequenz 13,56 MHz, Elektrodenmaterial Kupfer, Leistung 1,7 kW, Aufheizzeit 1,5 h) mit einer Vergleichsvorrichtung, wobei die Vorrichtung drei Elektroden aufweist und die mittlere Elektrode in ei- nem Bereich beginnend vom Elektrodenanschluss auf einer Länge von 4 m von einer Luftkammer umgeben ist,

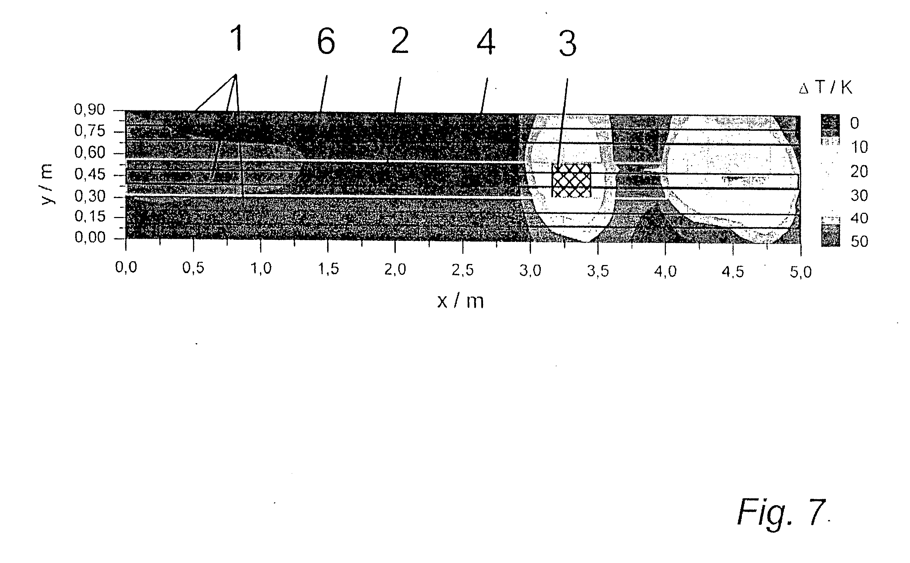

- Fig. 7: das Temperaturprofil eines Feststoffbettes nach Erwärmung (Radio- wellen-Frequenz 13,56 MHz, Elektrodenmaterial Kupfer, Leistung 1,2 kW, Aufheizzeit 2,5 h) mit einer Vorrichtung gemäß einer Ausfüh- rungsvariante der Erfindung, wobei die Vorrichtung drei Elektroden aufweist und die mittlere Elektrode in einem definierten axialen Be- reich (von x = 3,2 m bis x = 3,5 m) von einer Wasserkammer 3 und in einem weiteren Bereich (von x = 0 bis x = 3,2 m und x = 3,5 m bis x = 4,0 m) von einer Luftkammer 2 umgeben ist, und

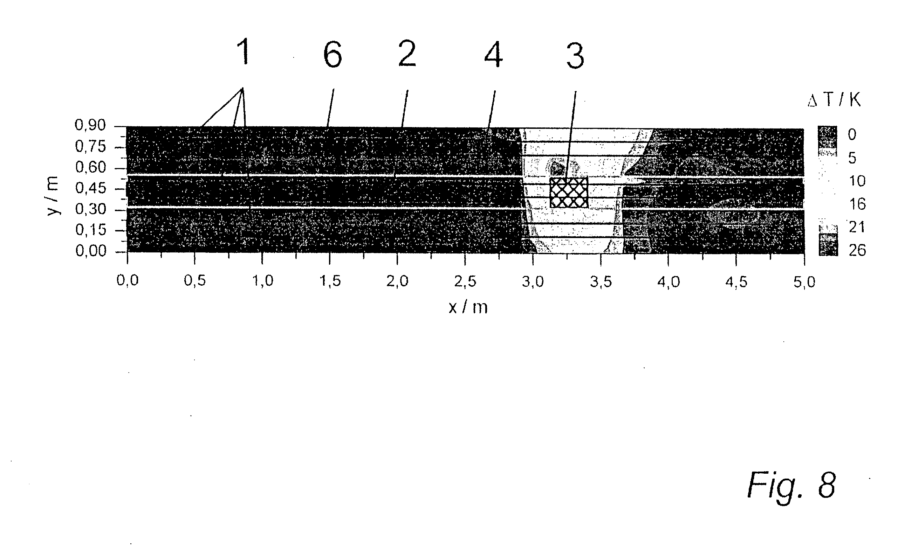

- Fig. 8: das Temperaturprofil eines Feststoffbettes nach Erwärmung (Radio- wellen-Frequenz 13,56 MHz, Elektrodenmaterial Kupfer, Leistung 0,8 kW, Aufheizzeit 1,25 h) mit einer Vorrichtung gemäß einer zwei- ten Ausführungsvariante der Erfindung, bei welcher die Elektrode in einem definierten axialen Bereich (von x = 3,2 m bis x = 3,5 m) von einer Wasserkammer und im restlichen axialen Bereich sowie im Be- reich des der Bodenoberfläche abgewandten Endes von einer Luft- kammer umgeben ist.

Fig. 1 zeigt die schematische Darstellung einer Vergleichsvorrichtung mit einer stabförmigen Elektrode 1 und einem sich über einen (oberen) Teil der Elektrodenlänge erstreckenden, axialen Bereich 2, der mit einem Material (z. B. Luft), dessen relative Dielektrizitätskonstante geringer als die relative Dielektrizitätskonstante des zu erwärmenden Feststoffes 4 ist, gefüllt ist. Die Vorrichtung kann auch mehrere derartige vorzugsweise zylinderförmige Elektroden aufweisen, wobei vorzugsweise die mittlere Elektrode oder die mittlere Elektrodenreihe einen entsprechenden axialen Bereich aufweisen.

In unterschiedlichen Ausführungsbeispielen, deren Ergebnisse in den Fig. 6 bis 8 dargestellt sind, wurden Elektroden 1 aus unterschiedlichen elektrisch leitfähigen-Materialien wie Baustahl, Edelstahl oder Kupfer verwendet, wobei kein prinzipieller Einfluss des Elektrodenmaterials auf die Versuchsergebnisse festgestellt wurde. Jeweils ein Ende der Elektrode 1 wurde über die Erdoberfläche geführt und über ein elektronisches Anpassnetzwerk an einen HF-Generator mit einer Arbeitsfrequenz von 13,56 MHz angeschlossen. Prinzipiell ist die Verwendung von Frequenzen zwischen 1 und 50 MHz möglich, jedoch werden aus praktischen Gründen für industrielle und wissenschaftliche Anwendungen freigegebene Frequenzen (ca. 6 MHz, 13,56 MHz, 27 MHz) bevorzugt. Anschlussleitungen bestanden entweder aus Koaxialkabeln oder aus Kupferbändern. Die Temperatur im Festbett wurde kontinuierlich mittels faseroptischer Sensoren gemessen.

In der in Fig. 1 dargestellten Ausführungsvariante ist der obere Abschnitt der Elektrode 1 mit einem Führungsrohr 6 versehen, wodurch ein Luftspalt definierter Stärke um die Elektrode 1 herum realisiert wird. Damit wird die Elektrode 1 im oberen Bereich von einer hohlzylinderförmig ausgebildeten, axialen Luftkammer 2 umgeben, wodurch die Einkopplung der von der Elektrode 1 abgestrahlten Energie insbesondere im unteren axialen Bereich sowie im Bereich des unteren Endes der Elektrode 1 realisiert wird. Dadurch ist eine räumlich-selektive Erwärmung des Feststoffes 4 möglich.

Dabei kann eine solche Elektrode 1 sowohl allein als auch in Kombination mit weiteren Elektroden verwendet werden.

Fig. 2 zeigt eine schematische Darstellung einer Vergleichsvorrichtung mit einer Elektrode 1 und drei axialen Bereichen unterschiedlicher radialer Ausdehnung. Dabei ist die Elektrode 1 auf ihrer gesamten Länge von einem konzentrischen Führungsrohr 6 umgeben, wobei das Führungsrohr 6 in einem mittleren Abschnitt einen geringeren Außendurchmesser aufweist (die Elektrode 1 weist stets den gleichen Außendurchmesser auf). Die entstehende Kammer 2 ist mit einem Dielektrikum mit geringerer relativer Dielektrizitätskonstante als die des Feststoffes (z.B. Luft) gefüllt. Dadurch wird eine erhöhte Einkopplung der von der Elektrode 1 abgestrahlten Energie im mittleren Bereich der Elektrode 1 realisiert, wodurch die Schichten des Feststoffbettes 4 im mittleren Bereich der Elektrode 1 stärker als in den übrigen Bereichen erwärmt werden. Eine solche Anordnung kann sowohl allein als auch in Kombination mit weiteren Elektroden verwendet werden.

Fig. 3 zeigt eine schematische Darstellung einer erfindungsgemäßen Vorrichtung mit einer Elektrode 1 und drei axialen Bereichen 2, 3, 2 gleicher radialer Ausdehnung, wobei der mittlere axiale Bereich 3 aus einem anderen Material als die äußeren axialen Bereiche 2 besteht. Dabei ist die Elektrode 1 auf ihrer gesamten Länge (und sogar über das der Bodenoberfläche abgewandete Ende - unteres Ende - hinaus) von einem konzentrischen Führungsrohr 6 umgeben, wobei die Elektrode 1 in einem oberen und einem unteren Bereich 2 von einer Luftkammer und in einem mittleren Bereich 3 von einer Wasserkammer umgeben ist. Aufgrund der höheren relativen Dielektrizitätskonstante des Wassers im Vergleich zur Luft wird eine erhöhte Einkopplung der von der Elektrode 1 abgestrahlten Energie im mittleren Bereich der Elektrode 1 realisiert. Neben Luft und Wasser sind auch andere Füllmaterialien geeignet, wenn sie hinsichtlich der dielektrischen Eigenschaften die Voraussetzungen für eine selektive Einkopplung erfüllen.

Die relativen Dielektrizitätskonstanten der Medien sollten sich von der des Bodens vorzugsweise um den Faktor 3, besonders bevorzugt um den Faktor 5 unterscheiden. Dies trifft sowohl für die Materialien höherer als auch niedrigerer relativer Dielektrizitätskonstante zu.

Fig. 4 zeigt eine schematische Darstellung einer erfindungsgemäßen Vorrichtung mit fünf axialen Bereichen 2, 3 gleicher radialer Ausdehnung, wobei die äußeren axialen Bereiche 2 und der mittlere axiale Bereich 2 aus einem anderen Material als die übrigen axialen Bereiche 3 bestehen. Dabei ist die Elektrode 1 auf ihrer gesamten Länge von einem konzentrischen Führungsrohr 6 umgeben, wobei die Elektrode 1 in einzelnen axialen Abschnitten von Luftkammern 2 bzw. Wasserkammern 3 umgeben ist. Aufgrund der höheren relativen Dielektrizitätskonstante des Wassers im Vergleich zur Luft wird eine erhöhte Einkopplung der von der Elektrode 1 abgestrahlten Energie in denjenigen Bereichen der Elektrode 1 realisiert, welche von Wasserkammern 3 umgeben sind. Auf die vorgenannte Art und Weise können Bodenschichten in jeglicher Hinsicht räumlich-selektiv erwärmt werden. Eine solche Anordnung kann sowohl allein als auch in Kombination mit weiteren Elektroden verwendet werden. Neben Wasser und Luft können auch andere geeignete Dielektrika verwendet werden. In einer bevorzugten Ausführungsvariante sind die Ausdehnungen der axialen Bereiche entlang der Elektrode und/oder die Füllmaterialien variabel veränderbar. Damit ist eine optimale Anpassung der Vorrichtung an die (sich u. U. verändernden) Behandlungsarten des Feststoffes möglich. Werden fluide Dielektrika wie z. B. Wasser oder Luft verwendet, können die Kammern 2 bzw. 3 relativ einfach mit Pumpeinrichtungen gefüllt oder geleert werden.

Fig. 5 zeigt das Temperaturprofil eines Feststoffbettes nach Erwärmung mit einer Vorrichtung nach dem Stand der Technik. Es wurde ein Hochfrequenzgenerator mit einer Arbeitsfrequenz von 13,56 MHz verwendet. Die Aufheizzeit betrug 4 Stunden bei einer effektiv eingespeisten HF-Leistung von 1,65 kW. Es wurde zwei parallele, je 5 m lange Stabelektroden aus Kupfer eingesetzt (Ausdehnung in x-Richtung, Anschlusspunkt beider Elektroden bei x = 0). Die geerdete "kalte" Elektrode befand sich bei y = 0,125 m, die "heiße" Elektrode als Gegenelektrode mit bevorzugter Auskopplung der HF-Energie befand sich bei y = 0,375 m. Dargestellt ist die Messebene in 0,5 m Tiefe.

Die Erwärmung des Bodens 4 mit Hilfe der Vorrichtung nach dem Stand der Technik ist auf Grund der starken Dämpfung nachteilhafterweise auf den Anfangsbereich der Elektrode 1 in der Nähe des HF-Anschlusses (ca. 1 bis 2 m) beschränkt (also von x = 0 bis ca. x = 1,5 m).

Fig. 6 zeigt das sich nach 90 Minuten ergebende Temperaturprofil eines Feststoffbettes im Bereich von drei jeweils 5 m langen stabförmigen Kupferelektroden 1, gemäß Fig. 1 (Mittelelektrode bei y = 0,45 m, ähnlich Fig. 1). Die Elektroden waren in einer Ebene parallel zur Bodenoberfläche in 0,5 m Tiefe angeordnet (bei y = 0,15 m; y = 0,45 m und y = 0,75 m, Anschluss bei x = 0). Zur Bodensanierung werden die Elektroden im Gegensatz zum Ausführungsbeispiel vorzugsweise in einer Ebene senkrecht zur Bodenoberfläche angeordnet. Die parallele Anordnung erfolgte im Ausführungsbeispiel lediglich aufgrund der einfacheren Anbringung der Temperatursensoren. Natürlich ist eine senkrechte Einbringung der Elektroden auch nicht zwingend notwendig. Es ist auch möglich, die Elektroden schräg in das Feststoffbett (oder sogar parallel zur Bodenoberfläche - wie im Ausführungsbeispiel) einzubringen. Die Mittelelektrode war im Bereich zwischen dem Anschlusspunkt und x = 4 m von einer Luftkammer umgeben.

Dabei war die mittlere Elektrode 1 (Durchmesser 55 mm) mit einem Führungsrohr 6 (Durchmesser ca. 160 mm) konzentrisch versehen, wobei ein Luftspalt von ca. 50 mm um die mittlere Elektrode 1 realisiert wurde. Die Einbringung der Luftkammer 2 führte dazu, dass die Energieeinkopplung in den Boden im Bereich zwischen x = 0 und x = 4 m deutlich verringert wurde und sich die Bodenerwärmung vom Anschlusspunkt weg zum Ende des ummantelten Bereiches (also zwischen x = 4 m und x = 5 m) hin verschob. Beim dargestellten Versuch wurde eine HF-Leistung von 1,7 kW bei einer Frequenz von 13,56 MHz eingesetzt. Würde hingegen eine derartige Luftkammer 2 im Bereich zwischen x = 0 und x = 4 m der mittleren Elektrode fehlen, so zeigte sich der in Fig. 5 ersichtlich Temperaturverlauf mit einem bevorzugten Energieeintrag in den Bereich des Feststoffes 4 zwischen x = 0 und x = 1,5 m.

Fig. 7 zeigt das Temperaturprofil eines Feststoffbettes nach Erwärmung mit einer Vorrichtung gemäß einer Ausführungsvariante der Erfindung (ähnlich Fig. 3), wobei die Vorrichtung drei 5 m lange Kupferelektroden 1 aufweist und die mittlere "heiße" Elektrode in einem definierten Bereich (von x = 3,2 m bis x = 3,5 m) von einer Wasserkammer 3 und in einem weiteren Bereich (von x = 0 bis x = 3,2 m und x = 3,5 m bis x = 4,0 m) von einer Luftkammer 2 umgeben ist. Arbeitsfrequenz, Lage und Kontaktierung der Elektroden entsprechen den Angaben bei Fig. 6. Die mittlere HF-Leistung betrug 1,2 kW, die Aufheizzeit 2,5 Stunden. Mit der beschriebenen Modifikation der Stabelektrodengeometrie wurde erreicht, dass die Erwärmung des Bodens 4 vor allem im Bereich der Wasserkammer 3 sowie im Bereich des Endes der Elektrode nach dem Ende des Luftspaltes (zwischen x = 4 m und x = 5,0 m) erfolgte.

Erstreckte sich die Luftkammer 2, wie in Fig. 8 dargestellt, jedoch (außer im Bereich der Wasserkammer 3) über die gesamte Länge der Elektrode, also von x = 0 bis x = 3,2 m und von x = 3,5 m bis x = 5,0 m und wurde die Elektrode 1 auch im Bereich ihres dem Anschlusspunkt abgewandten Endes (bei x = 5,0 m) vom Boden isoliert, d.h. beispielsweise mit einer Luftkammer versehen, erfolgte die Erwärmung des Bodens 4 hauptsächlich im Bereich der Wasserkammer 3. Im dargestellten Ausführungsbeispiel wurde eine HF-Leistung von 0,8 kW für 1,25 Stunden angewandt (Frequenz 13,56 MHz).

### Bezugszeichenliste

- 1: Stabelektrode
- 2: Luftkammer/Luft
- 3: Wasserkammer/Wasser
- 4: Feststoffbett
- 5: Längsachse der Elektrode
- 6: Führungsrohr

## Patentansprüche

1. Verfahren zur räumlich-selektiven Erwärmung eines Feststoffbettes (4) mittels elektromagnetischer Strahlung mit folgenden Verfahrensschritten:
- Einbringen mindestens einer stabförmigen Elektrode (1) in ein Feststoffbett (4), und
- Einkoppeln von elektromagnetischer Strahlung in das Feststoffbett (4) über die mindestens eine stabförmige Elektrode (1), wobei jede der mindestens einen stabförmigen Elektroden (1) mit einer Hochfrequenzspannung definierter Polarität gespeist wird,
**dadurch gekennzeichnet, dass**
der Bereich zwischen der Mantelfläche der Elektrode (1) und dem Feststoffbett (4) in mindestens zwei Abschnitte entlang der Längsachse (5) der Elektrode (1) unterteilt ist und die Abschnitte vollständig gefüllt sind mit jeweils einem Material unterschiedlicher relativer Dielektrizitätskonstante, dessen relative Dielektrizitätskonstante sich auch von der relativen Dielektrizitätskonstante des Feststoffbettes (4) unterscheidet.

2. Verfahren nach Anspruch 1,
**dadurch gekennzeichnet, dass**
zusätzlich im Bereich des der Oberfläche des Feststoffbettes (4) abgewandten Endes der Elektrode (1) ein Material angeordnet wird, dessen relative Dielektrizitätskonstante sich von der relativen Dielektrizitätskonstante des Feststoffbettes (4) unterscheidet.

3. Verfahren nach einem der vorhergehenden Ansprüche,
**dadurch gekennzeichnet, dass**
in mindestens zwei Abschnitten entlang der Elektrode (1) ein Material mit bereichsweise unterschiedlicher radialer Ausdehnung zwischen Mantelfläche der Elektrode (1) und Feststoffbett (4) angeordnet wird, welches eine relative Dielektrizitätskonstante aufweist, die sich von der relativen Dielektrizitätskonstante des Feststoffbettes (4) unterscheidet.

4. Verfahren nach einem der vorhergehenden Ansprüche,
**dadurch gekennzeichnet, dass**
die Materialien, deren relative Dielektrizitätskonstanten sich von der relativen Dielektrizitätskonstante des Feststoffbettes (4) unterscheiden, konzentrisch um die Elektrode (1) herum angeordnet werden.

5. Verfahren nach einem der vorhergehenden Ansprüche,
**dadurch gekennzeichnet, dass**
die Materialien, deren relative Dielektrizitätskonstanten sich von der relativen Dielektrizitätskonstante des Feststoffbettes (4) unterscheiden, in ein zur Elektrode (1) konzentrisch angeordnetes Führungsrohr (6) eingebracht werden.

6. Verfahren nach Anspruch 5,
**dadurch gekennzeichnet, dass**
die Materialien, deren relative Dielektrizitätskonstanten sich von der relativen Dielektrizitätskonstante des Feststoffbettes (4) unterscheiden, in ein zur Elektrode (1) konzentrisch angeordnetes Führungsrohres in vordefinierten Abschnitten (2, 3) eingebracht werden.

7. Verfahren nach einem der vorhergehenden Ansprüche,
**dadurch gekennzeichnet, dass**
die radiale Ausdehnung der zwischen Mantelfläche der Elektrode (1) und Feststoffbett (4) eingebrachten Materialien, deren relative Dielektrizitätskonstanten sich von der relativen Dielektrizitätskonstante des Feststoffbettes (4) unterscheiden, zwischen 30% und 300% des Durchmessers der Elektrode (1) beträgt.

8. Vorrichtung zur räumlich-selektiven Erwärmung eines Feststoffbettes (4) mittels elektromagnetischer Strahlung aufweisend mindestens eine stabförmige Elektrode (1), wobei die mindestens eine stabförmige Elektrode (1) mit einer HF-Quelle zur Einspeisung von HF-Spannung definierter Polarität verbunden ist,
**dadurch gekennzeichnet, dass**
die Vorrichtung mindestens zwei Abschnitte entlang der Längsachse (5) der Elektrode (1) aufweist, in denen zwischen der Mantelfläche der Elektrode (1) und dem Feststoffbett (4) Materialien unterschiedlicher relativer Dielektrizitätskonstanten angeordnet sind, deren relative Dielektrizitätskonstanten sich sowohl untereinander als auch von der relativen Dielektrizitätskonstante des Feststoffbettes (4) unterscheiden.

9. Vorrichtung nach Anspruch 8,
**dadurch gekennzeichnet, dass**
die Vorrichtung ein zur Längsachse (5) der Elektrode (1) konzentrisch angeordnetes Führungsrohr aufweist, innerhalb dessen, die Materialien, deren relative Dielektrizitätskonstanten sich von der relativen Dielektrizitätskonstante des Feststoffbettes (4) unterscheiden, angeordnet sind.

10. Vorrichtung nach Anspruch 9,
**dadurch gekennzeichnet, dass**
innerhalb des konzentrisch angeordneten Führungsrohres mindestens zwei axiale Abschnitte vorgesehen sind, innerhalb derer Materialien unterschiedlicher relativer Dielektrizitätskonstanten angeordnet sind, wobei die Abschnitte mit einer Vorrichtung zur flexiblen Einbringung und Entfernung der Materialien verbunden sind.

11. Vorrichtung nach einem der Ansprüche 8 bis 10,
**dadurch gekennzeichnet, dass**
die Materialien, deren relative Dielektrizitätskonstanten sich von der relativen Dielektrizitätskonstante des Feststoffbettes (4) unterscheiden, eine radiale Ausdehnung zwischen 30% und 300% des Durchmessers der Elektrode (1) aufweisen.

12. Vorrichtung nach einem der Ansprüche 8 bis 11,
**gekennzeichnet durch** mindestens zwei Elektroden (1), deren Längsachsen (5) parallel zueinander angeordnet sind.

## Claims

1. Method for spatially selectively heating a solid bed (4) by means of electromagnetic radiation, comprising the following method steps:
- introducing at least one rod-shaped electrode (1) into a solid bed (4), and
- injecting electromagnetic radiation into the solid bed (4) via the at least one rod-shaped electrode (1), each of the at least one rod-shaped electrodes (1) being supplied with a radio frequency voltage of a defined polarity,
**characterized in that**
the region between the external surface of the electrode (1) and the solid bed (4) is divided into at least two sections along the longitudinal axis (5) of the electrode (1) and the sections are completely filled with in each case a material of different relative permittivity, the relative permittivity of which also differs from the relative permittivity of the solid bed (4).

2. Method according to Claim 1,
**characterized in that**
in addition, in the region of that end of the electrode (1) which is remote from the surface of the solid bed (4), a material is arranged, the relative permittivity of which differs from the relative permittivity of the solid bed (4).

3. Method according to one of the preceding claims,
**characterized in that**
in at least two sections along the electrode (1), a material with a radial extent, which differs regionally, is arranged between external surface of the electrode (1) and solid bed (4), which material has a relative permittivity which differs from the relative permittivity of the solid bed (4).

4. Method according to one of the preceding claims,
**characterized in that**
the materials, the relative permittivities of which differ from the relative permittivity of the solid bed (4), are arranged concentrically around the electrode (1).

5. Method according to one of the preceding claims,
**characterized in that**
the materials, the relative permittivities of which differ from the relative permittivity of the solid bed (4), are introduced into a guide tube (6) which is arranged concentrically with respect to the electrode (1).

6. Method according to Claim 5,
**characterized in that**
the materials, the relative permittivities of which differ from the relative permittivity of the solid bed (4), are introduced into a guide tube which is arranged concentrically with respect to the electrode (1) in predefined sections (2, 3).

7. Method according to one of the preceding claims,
**characterized in that**
the radial extent of the materials introduced between the external surface of the electrode (1) and solid bed (4), the relative permittivities of which differ from the relative permittivity of the solid bed (4), is between 30% and 300% of the diameter of the electrode (1).

8. Apparatus for spatially selectively heating a solid bed (4) by means of electromagnetic radiation, having at least one rod-shaped electrode (1), wherein the at least one rod-shaped electrode (1) is connected to an RF source for supplying RF voltage of defined polarity,
**characterized in that**
the apparatus has at least two sections along the longitudinal axis (5) of the electrode (1), in which between the external surface of the electrode (1) and the solid bed (4) materials having different relative permittivities are arranged, the relative permittivities of which differ from one another and also from the relative permittivity of the solid bed (4).

9. Apparatus according to Claim 8,
**characterized in that**
the apparatus has a guide tube which is arranged concentrically with respect to the longitudinal axis (5) of the electrode (1), inside which guide tube the materials, the relative permittivities of which differ from the relative permittivity of the solid bed (4), are arranged.

10. Apparatus according to Claim 9,
**characterized in that**
inside the concentrically arranged guide tube, at least two axial sections are provided, inside which materials having different relative permittivities are arranged, with the sections being connected to an apparatus for flexibly introducing and removing the materials.

11. Apparatus according to one of Claims 8 to 10,
**characterized in that**
the materials, the relative permittivities of which differ from the relative permittivity of the solid bed (4), have a radial extent of between 30% and 300% of the diameter of the electrode (1).

12. Apparatus according to one of Claims 8 to 11,
**characterized by** at least two electrodes (1), the longitudinal axes (5) of which are arranged mutually parallel.

## Revendications

1. Procédé de chauffage spatialement sélectif d'un lit de solide (4) au moyen d'un rayonnement électromagnétique, le procédé présentant les étapes suivantes :
- placement d'au moins une électrode (1) en forme de barre dans un lit de solide (4) et
- injection d'un rayonnement électromagnétique dans le lit de solide (4) par l'intermédiaire de la ou des électrodes (1) en forme de barre, chacune des différentes électrodes (1) en forme de barre étant alimentée en une tension à haute fréquence de polarité définie,
**caractérisé en ce que**
la zone située entre la surface d'enveloppe de l'électrode (1) et la lit de solide (4) est divisée en au moins deux parties le long de l'axe longitudinal (5) de l'électrode (1) et ces parties sont complètement remplies chacune d'un matériau dont la constante diélectrique relative est différente et dont la constante diélectrique relative est également différente de la constante diélectrique relative du lit de solide (4).

2. Procédé selon la revendication 1, **caractérisé en ce qu'**un matériau dont la constante diélectrique relative est différente de la constante diélectrique relative du lit de solide (4) est également disposé au niveau de l'extrémité, non tournée vers la surface du lit de solide (4), de l'électrode (1).

3. Procédé selon l'une des revendications précédentes, **caractérisé en ce qu'**en au moins deux parties situées le long de l'électrode (1), un matériau dont l'extension radiale diffère d'une partie à l'autre est disposé entre la surface d'enveloppe de l'électrode (1) et le lit de solide (4), le matériau présentant une constante diélectrique relative qui diffère de la constante diélectrique relative du lit de solide (4).

4. Procédé selon l'une des revendications précédentes, **caractérisé en ce que** les matériaux dont la constante diélectrique relative est différente de la constante diélectrique relative du lit de solide (4) sont disposés concentriquement autour de l'électrode (1).

5. Procédé selon l'une des revendications précédentes, **caractérisé en ce que** les matériaux dont la constante diélectrique relative est différente de la constante diélectrique relative du lit de solide (4) sont placés dans un tube de guidage (6) disposé concentriquement par rapport à l'électrode (1).

6. Procédé selon la revendication 5, **caractérisé en ce que** les matériaux dont la constante diélectrique relative est différente de la constante diélectrique relative du lit de solide (4) sont placés dans des parties prédéfinies (2, 3) d'un tube de guidage disposé concentriquement par rapport à l'électrode (1).

7. Procédé selon l'une des revendications précédentes, **caractérisé en ce que** l'extension radiale des matériaux placés entre la surface d'enveloppe de l'électrode (1) et le lit de solide (4) et dont la constante diélectrique relative est différente de la constante diélectrique relative du lit de solide (4) représente entre 30 % et 300 % du diamètre de l'électrode (1).

8. Dispositif de chauffage spatialement sélectif d'un lit de solide (4) au moyen d'un rayonnement électromagnétique, le dispositif présentant au moins une électrode (1) en forme de barre, la ou les électrodes en forme de barre (1) étant reliées à une source HF pour y injecter une tension HF de polarité définie,
**caractérisé en ce que**
le dispositif présente le long de l'axe longitudinal (5) de l'électrode (1) au moins deux parties dans lesquelles des matériaux de différentes constantes diélectriques relatives, dont les constantes diélectriques relatives sont différentes les unes des autres et de la constante diélectrique relative du lit de solide (4) sont disposés entre la surface d'enveloppe de l'électrode (1) et le lit de solide (4).

9. Dispositif selon la revendication 8, **caractérisé en ce que** le dispositif présente un tube de guidage disposé concentriquement par rapport à l'axe longitudinal (5) de l'électrode (1) et dans lequel sont disposés des matériaux dont la constante diélectrique relative est différente de la constante diélectrique relative du lit de solide (4).

10. Dispositif selon la revendication 9, **caractérisé en ce qu'**au moins deux parties axiales à l'intérieur desquelles des matériaux de constante diélectrique relative différentes sont disposés sont prévues à l'intérieur du tube de guidage disposé concentriquement, ces parties étant reliées à un dispositif qui permet d'apporter et d'enlever de manière flexible les matériaux.

11. Dispositif selon l'une des revendications 8 à 10, **caractérisé en ce que** les matériaux dont la constante diélectrique relative est différente de la constante diélectrique relative du lit de solide (4) ont une extension radiale qui représente entre 30 % et 300 % du diamètre de l'électrode (1).

12. Dispositif selon l'une des revendications 8 à 11, **caractérisé par** au moins deux électrodes (1) dont les axes longitudinaux (5) sont disposés parallèlement l'un à l'autre.
